# EUROPEAN PATENT SPECIFICATION

(11) **EP 3 306 780 B1**
(45) Date of publication and mention of the grant of the patent: **04.12.2019**
(21) Application number: 16807522.4
(22) Date of filing: 08.06.2016
(51) Int. Cl.: H02J 3/38, H02J 3/46, H02J 7/35, H02J 3/32, H02J 13/00

(54) **POWER CONVERSION DEVICE, POWER MANAGEMENT DEVICE, AND POWER MANAGEMENT METHOD**
STROMUMWANDLUNGSVORRICHTUNG, STROMVERWALTUNGSVORRICHTUNG UND STROMVERWALTUNGSVERFAHREN
DISPOSITIF DE CONVERSION DE PUISSANCE, DISPOSITIF DE GESTION DE PUISSANCE ET PROCÉDÉ DE GESTION DE PUISSANCE

(30) Priority: 08.06.2015 JP 2015115849
(43) Date of publication of application: 11.04.2018
(73) Proprietor: Kyocera Corporation, Kyoto 612-8501 (JP)
(72) Inventor: NAKAMURA, Kazutaka, Kyoto-shi Kyoto 612-8501 (JP); KAKUDA, Yuji, Kyoto-shi Kyoto 612-8501 (JP); SATO, Yuri, Kyoto-shi Kyoto 612-8501 (JP); SUZUKI, Yuki, Kyoto-shi Kyoto 612-8501 (JP); INOUE, Takashi, Kyoto-shi Kyoto 612-8501 (JP); KAMEI, Kentaro, Kyoto-shi Kyoto 612-8501 (JP)
(74) Representative: SSM Sandmair
(86) International application number: PCT/JP2016/067076
(87) International publication number: WO 2016/199816

(56) References cited:
- WO-A1-2014/057867
- WO-A1-2014/168145
- JP-A- 2004 135 454
- JP-A- 2013 207 862
- JP-A- 2014 090 549
- JP-A- 2014 187 799
- US-A1- 2011 153 098
- US-A1- 2013 229 059

## Description

### TECHNICAL FIELD

The present disclosure relates to a power conversion apparatus that receives an output suppression message for instructing output suppression of a dispersed power source from an external server, a power management apparatus that receives a predetermined message from a power conversion apparatus, and a power management method that receives an output suppression message for instructing output suppression of a dispersed power source from an external server.

### BACKGROUND ART

A power conversion apparatus (power conditioner) connected to a dispersed power source that outputs DC power is known. The power conversion apparatus includes a direct current (DC) converter (a DC/DC converter) that converts a voltage of DC power input from a dispersed power source and an inverter that converts the DC power input from the DC converter into alternate current (AC) power (for example, see Patent Literature 1).

Here, the power conversion apparatus receives a message for instructing output suppression of the dispersed power source (hereinafter referred to as an "output suppression message") from a server of a power transmission and distribution company such as a power company or a distribution company (hereinafter referred to as an "external server") and suppress the output of the dispersed power source in accordance with the output suppression message.

### CITATION LIST

### PATENT LITERATURE

Patent Literature 1: Japanese application publication No. 2014-171359

WO 2014/057867 A1 discloses a solar power generation device and a power management system that does not suddenly cause output stop due to an overloaded state, as well as an electric power load and a measuring apparatus for the solar power generation device and the power management system.

US 2011/153098 A1 relates to a power generation system utilizing natural energy, a power amount calculation apparatus and a power amount calculation method.

### SUMMARY

A power conversion apparatus according to a first aspect comprises: a first communication unit configured to receive, from an external server, an output suppression message instructing output suppression of a dispersed power source; and a second communication unit configured to perform communication of a predetermined message having a predetermined format with a power management apparatus. The predetermined format includes an information element capable of storing setting information indicating a setting related to the output suppression of the dispersed power source. The second communication unit is configured to transmit, to the power management apparatus, the predetermined message including the setting information as the information element, wherein the setting information includes information specifying a type of the output suppression of the dispersed power source according to the output suppression message.

A power management apparatus according to a second aspect comprises: a controller configured to control a display apparatus such that power information indicating power used in a consumer's facility is displayed; and a communication unit configured to perform communication of a predetermined message having a predetermined format with a power conversion apparatus that receives, from an external server, an output suppression message instructing output suppression of a dispersed power source. The predetermined format includes an information element capable of storing setting information indicating a setting related to the output suppression of the dispersed power source. The communication unit is configured to receive, from the power conversion apparatus, the predetermined message including the setting information as the information element. The controller is configured to perform display control for information related to the output suppression of the dispersed power source in accordance with the predetermined message including the setting information as the information element, wherein the setting information includes information specifying a type of the output suppression of the dispersed power source according to the output suppression message.

A power management method according to a third aspect comprises: a step of receiving, by a power conversion apparatus, an output suppression message from an external server, the output suppression message instructing output suppression of a dispersed power source, the power conversion apparatus performing communication of a predetermined message having a predetermined format with a power management apparatus that manages power of an equipment installed in a consumer's facility; and a step of transmitting, by the power conversion apparatus, to the power management apparatus. The predetermined message including setting information indicating a setting related to the output suppression of the dispersed power source as the information element included in the predetermined format, wherein the setting information includes information specifying a type of the output suppression of the dispersed power source according to the output suppression message.

### BRIEF DESCRIPTION OF DRAWINGS

Fig. 1 is a diagram illustrating a power management system 1 according to an embodiment.
Fig. 2 is a diagram illustrating a communication apparatus 132 according to an embodiment.
Fig. 3 is a diagram illustrating an EMS 160 according to an embodiment.
Fig. 4 is a diagram illustrating an example of a predetermined message according to an embodiment.
Fig. 5 is a diagram illustrating an example of a predetermined message according to an embodiment.
Fig. 6 is a diagram illustrating an example of a predetermined message according to an embodiment.
Fig. 7 is a sequence diagram illustrating a power management method according to an embodiment.
Fig. 8 is a sequence diagram illustrating a power management method according to an embodiment.

### DESCRIPTION OF EMBODIMENTS

Hereinafter, the embodiment will be described with reference to the drawings. Note that the same or similar reference signs are applied to the same or similar portions in the following descriptions of the drawings.

It must be understood that the drawings are schematic, and the ratio of each dimension and the like may differ from the real one. Accordingly, specific dimensions and the like should be understood with reference to the following description. Furthermore, it must be understood that, the relationship or ratio of dimensions included in each of the drawings may differ.

### [Overview of disclosure]

In recent years, power management apparatus (EMS: Energy Management System) that manages power of equipment installed in a consumer's facility has attracted attention.

However, since the mode of the output suppression of the dispersed power source may vary depending on the setting of the power conversion apparatus related to the output suppression of the dispersed power source, one of the challenges is how the power management apparatus knows the state of the output suppression of the dispersed power source.

A power conversion apparatus according to the overview of the disclosure comprises: a first communication unit configured to receive, from an external server, an output suppression message instructing output suppression of a dispersed power source; and a second communication unit configured to perform communication of a predetermined message having a predetermined format with a power management apparatus. The predetermined format includes an information element capable of storing setting information indicating a setting related to the output suppression of the dispersed power source. The second communication unit is configured to transmit, to the power management apparatus, the predetermined message including the setting information as the information element.

In the overview of the disclosure, the second communication unit transmits, to the power management apparatus, the predetermined message including the setting information as the information element. Therefore, the power management apparatus can know the setting of the power conversion apparatus related to the output suppression of the dispersed power source.

### [Embodiment]

### (Power management system)

A power management system according to an embodiment will be described below.

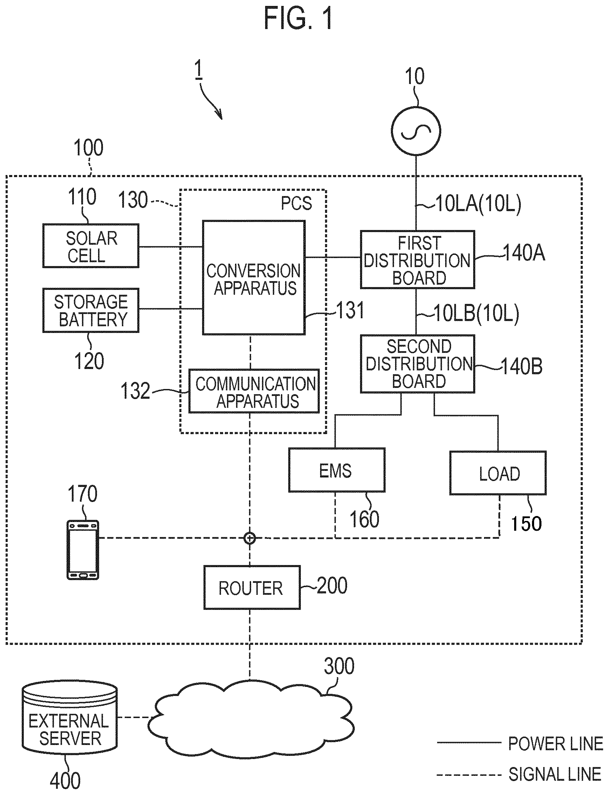

As illustrated in Fig. 1, the power management system 1 includes a consumer's facility 100 and an external server 400. The consumer's facility 100 includes a router 200. The router 200 is connected to the external server 400 via a network 300. The router 200 constitutes a local area network and is connected to each equipment (for example, a communication apparatus 132 of a PCS 130, a load 150, an EMS 160, and a display apparatus 170). In Fig. 1, a solid line indicates a power line, and a dotted line indicates a signal line. The present disclosure is not limited to this example, and a signal may be transmitted via power line.

The consumer's facility 100 includes a solar cell 110, a storage battery 120, the PCS 130, the distribution board 140, the load 150, the EMS 160, and the display apparatus 170.

The solar cell 110 is an apparatus that generates power in response to light reception. The solar cell 110 outputs the generated DC power. A power generation amount of the solar cell 110 varies depending on an amount of solar radiation radiated to the solar cell 110. The solar cell 110 is an example of a dispersed power source that operates in accordance with a message (output suppression message) for instructing output suppression of the dispersed power source.

Here, the output suppression of the dispersed power source refers to reducing the amount of power that reversely flows to a grid out of the power generated by the dispersed power source. The reducing of the amount of power that reversely flows includes setting the amount of power that reversely flows to zero. By reducing the amount of power that reversely flows, for example, it is possible to stabilize the grid. Further, the output suppression of the dispersed power source includes reducing the output (power generation or discharging) of the dispersed power source regardless of the reverse power flow. Thus, for example, it is possible to contribute to an increase in a power purchase amount in the consumer's facility or to reduce a gas purchase amount when the dispersed power source is a fuel cell.

The storage battery 120 is an apparatus that accumulates power. The storage battery 120 outputs the accumulated DC power. The storage battery 120 may operate in accordance with the output suppression message, but in an embodiment, an example in which the storage battery 120 need not operate in accordance with the output suppression message is described.

The PCS 130 is an example of a power conversion apparatus (a power conditioning system (PCS)) that converts DC power to AC power. In an embodiment, the PCS 130 includes a conversion apparatus 131 and a communication apparatus 132.

The conversion apparatus 131 converts the DC power input from the solar cell 110 to the AC power and converts the DC power input from the storage battery 120 into the AC power. Further, the conversion apparatus 131 converts the AC power supplied from a power grid 10 into the DC power. The conversion apparatus 131 is connected to a main power line 10L (here, a main power line 10LA and a main power line 10LB) connected to the power grid 10 via a first distribution board 140A and also connected to both the solar cell 110 and the storage battery 120. The main power line 10LA is a power line connecting the power grid 10 with the first distribution board 140A, and the main power line 10LB is a power line connecting the first distribution board 140A with a second distribution board 140B.

The communication apparatus 132 is connected to the conversion apparatus 131, receives various kinds of messages to be transmitted to the conversion apparatus 131, and transmits various kinds of messages supplied from the conversion apparatus 131. In communication between the communication apparatus 132 and the conversion apparatus 131, a protocol (for example, its own protocol) applied to the PCS 130 is used.

In an embodiment, the communication apparatus 132 is connected to the external server 400 via the router 200 and receives the output suppression message for instructing the output suppression of the dispersed power source from the router 200. The communication apparatus 132 and the external server 400 may communicate via a dedicated line or may communicate via a public communication line such as the Internet.

The communication apparatus 132 is connected to the EMS 160 via the router 200, and performs communication of a predetermined message having a predetermined format with the EMS 160. The predetermined format is not particularly limited, and for example, an ECHONET Lite scheme, an SEP 2.0 scheme, a KNX scheme, or the like can be used.

For example, the predetermined format is a format conforming to the ECHONET Lite scheme. In this case, the predetermined message may be a command that can include at least one of setting information indicating a setting related to the output suppression of the dispersed power source and record/schedule information related to at least one of a record and a schedule of the output suppression of the dispersed power source. Specifically, examples of the predetermined message include an SET command, a GET command, a response command to a GET command, and an INF command.

The SET command is a message for instructing a setting or an operation for the PCS 130. The GET command is a message for acquiring a status of the PCS 130. The response command is a message including information requested by the GET command. The INF command is a message for notifying of the status of the PCS 130. In an embodiment, the GET command is an example of a transmission request message for requesting transmission of a message from the PCS 130 to the EMS 160.

The distribution board 140 is connected to the main power line 10L. The distribution board 140 includes the first distribution board 140A and the second distribution board 140B. The first distribution board 140A is connected to the power grid 10 via the main power line 10LA and connected to the solar cell 110 and the storage battery 120 via the conversion apparatus 131. Further, the first distribution board 140A controls the power supplied from the conversion apparatus 131 and the power supplied from the power grid 10 such that the power flows to the main power line 10LB. The power flowing from the main power line 10LB is distributed to each equipment (here, the load 150 and the EMS 160) through the second distribution board 140B.

The load 150 is an apparatus that consumes the power supplied via the power line. For example, the load 150 includes an apparatus such as a refrigerator, a lighting, an air conditioner, a television, or the like. The load 150 may be a single apparatus or a plurality of apparatuses.

The EMS 160 is an apparatus (an energy management system (EMS)) that manages the power information indicating the power in the consumer's facility 100. The power in the consumer's facility 100 refers to power flowing in the consumer's facility 100, power purchased by the consumer's facility 100, power sold from the consumer's facility 100, or the like.

The EMS 160 may control a power generation amount of the solar cell 110, the charging amount of the storage battery 120 and a discharging amount of the storage battery 120. The EMS 160 may be configured integrally with the distribution board 140 or the PCS 130. The EMS 160 is an apparatus connected to the network 300, and the function of the EMS 160 may be provided through a cloud service via the network 300.

In an embodiment, the EMS 160 is connected to each equipment (for example, the communication apparatus 132 of the PCS 130 and the load 150) via the router 200, and performs communication of a predetermined message having a predetermined format with each equipment.

The EMS 160 is connected to the display apparatus 170 via the router 200 and communicates with the display apparatus 170. The EMS 160 may perform communication of a predetermined message having a predetermined format with the display apparatus 170. As described above, the predetermined format is, for example, a format conforming to the ECHONET Lite scheme.

The display apparatus 170 displays the power information indicating the power in the consumer's facility 100. Examples of the display apparatus 170 include a smartphone, a tablet, a digital television, and a dedicated terminal. The display apparatus 170 is connected to the EMS 160 in a wired or radio manner and communicates with the EMS 160. The display apparatus 170 may perform communication of a predetermined message having a predetermined format with the EMS 160. The display apparatus 170 receives data necessary for displaying the power information from the EMS 160.

The communication apparatus 132 is connected to the external server 400 via the network 300 through the router 200. The communication apparatus 132 is connected with the router 200 in a wired or radio manner, and the router 200 is connected with the communication apparatus 132 in a wired or radio manner.

The network 300 is a communication network connecting the EMS 160 with the external server 400. The network 300 may be the Internet. The network 300 may include a mobile communication network. Further, the network 300 may be a dedicated communication line or a general communication line. For example, when the output of the solar cell 110 is a predetermined output or more, the output suppression can be executed more reliably using a dedicated communication line as the network 300.

The external server 400 transmits the output suppression message indicating the output suppression of the dispersed power source. The external server 400 may transmit a message (a demand response (DR)) for instructing suppression of the power flow from the power grid 10.

The output suppression message includes a target output suppression level indicating a level of the output suppression of the dispersed power source (here, the solar cell 110). The target output suppression level is decided in accordance with an output certified as an output capability (for example, a rated output) of the PCS that controls the dispersed power source (hereinafter referred to as an "equipment certified output"). The target output suppression level may be indicated by an absolute value (for example, ○○ kW) decided in accordance with the equipment certified output, may be indicated by a relative value (for example, a decrease of ○○ kW) with respect to the equipment certified output, or may be indicated by a suppression proportion (for example, ○○%) with respect to the equipment certified output. Further, the target output suppression level has been described using the equipment certified output but may be an equipment certified capacity [kWh].

When the output capability of the dispersed power source is different from the output capability of the PCS, a smaller one of the output capabilities is the equipment certified output. In a case in which a plurality of PCSs are installed, the equipment certified output is a sum of output capabilities of a plurality of PCSs.

In an embodiment, the output suppression message includes calendar information indicating a schedule of the output suppression of the dispersed power source. In the calendar information, the schedule of the output suppression of the dispersed power source may be set in units of 30 minutes. The calendar information may include a schedule of one day, a schedule of one month, or a schedule of one year.

In an embodiment, a predetermined period may be decided as a maximum period in which the output suppression of the dispersed power source is performed. For example, a predetermined time may be the number of days per year (a number-of-days rule) or may be a cumulative time per year (a cumulative time rule). More specifically, for example, the predetermined period may be 30 days per year (a 30 day rule) or may be 360 hours per year (a 360 hour rule). However, the predetermined period may not be decided (a designation rule). These rules are types of the output suppression of the dispersed power source according to the output suppression message.

### (Communication apparatus)

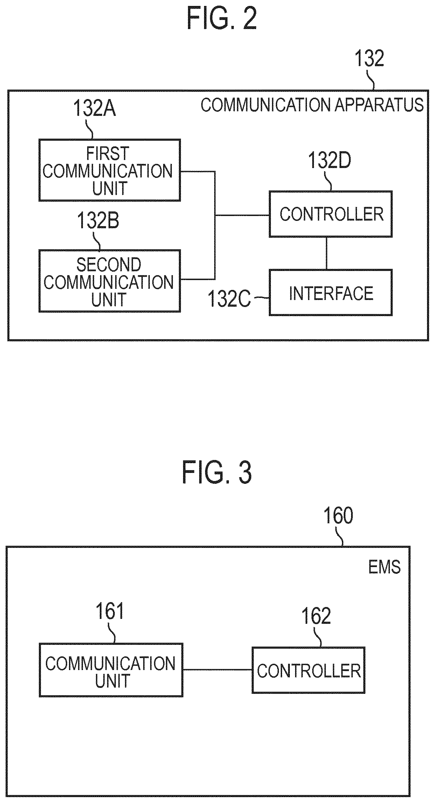

The communication apparatus according to an embodiment will be described below. The communication apparatus 132 includes a first communication unit 132A, a second communication unit 132B, an interface 132C, and a controller 132D as illustrated in Fig. 2.

The first communication unit 132A receives the output suppression message for instructing the output suppression of dispersed power source from the external server 400. In an embodiment, the first communication unit 132A may receive the output suppression message from the external server 400 without going through the EMS 160.

The second communication unit 132B performs communication of a predetermined message having a predetermined format with the EMS 160. As described above, the predetermined format is, for example, a format conforming to the ECHONET Lite scheme. Here, the predetermined format used for communication between the communication apparatus 132 (the second communication unit 132B) and the EMS 160 may be different from a format used for communication between the communication apparatus 132 (the first communication unit 132A) and the external server 400. The predetermined format used for the communication between the second communication unit 132B (the second communication unit 132B) and the EMS 160 may be different from a format used for communication between the communication apparatus 132 (the interface 132C) and the conversion apparatus 131.

The second communication unit 132B may periodically transmit a predetermined message to the EMS 160. Specifically, the periodic transmission may be transmission at predetermined intervals such as 30 minutes, one hour, or one day. The present disclosure is not limited thereto, and the second communication unit 132B may transmit a predetermined message having a predetermined format when connected to a network, when activated, when reactivated, or when setting information to be described later is changed.

Further, the second communication unit 132B may transmit a predetermined message to the external server 400 when transmitting the predetermined message to the EMS 160. Accordingly, when the predetermined message includes setting information to be described later, the external server 400 can know a setting status of the conversion apparatus 131. Further, when a predetermined message is transmitted to the external server 400, the output suppression message received by the first communication unit may be transmitted to the external server 400.

In an embodiment, the predetermined format includes an information element capable of storing the setting information indicating a setting related to the output suppression of the dispersed power source. The second communication unit 132B transmits the predetermined message including the setting information as the information element to the EMS 160. Secondly, in an embodiment, the predetermined format includes record/schedule information related to at least one of a record and a schedule of the output suppression of the dispersed power source. The second communication unit 132B transmits the predetermined message including the record/schedule information as the information element to the EMS 160.

Here, when the predetermined format is a format conforming to the ECHONET Lite scheme, the second communication unit 132B receives the transmission request message (the GET command) for requesting the EMS 160 to transmit a message as a predetermined message from the EMS 160. In this case, the second communication unit 132B may transmit a predetermined message (the INF command) including one of the setting information and the record/schedule information as an information element to the EMS 160 without depending on the transmission request message (the GET command). Alternatively, the second communication unit 132B may transmit a predetermined message (the response command) including one of the setting information and the record/schedule information as the information element to the EMS 160 in accordance with the transmission request message (the GET command).

In an embodiment, the setting information includes at least one of a plurality of information pieces (1A) to (1E) to be described below. Since the setting information includes two or more information pieces, the EMS 160 can know the status of the PCS 130 in further detail.
(1A) The setting information includes information indicating whether or not the dispersed power source is an output suppression target.
(1B) The setting information includes information indicating a power selling method for the power output from the dispersed power source. The power selling method is, for example, total amount power selling (total amount purchase) or surplus power selling (surplus purchase). In the total amount power selling, the output of the dispersed power source is not consumed in the load 150, and the entire output of the dispersed power source is sold. On the other hand, in the surplus power selling, the output of the dispersed power source is consumed in the load 150, and a surplus output is sold. In the surplus power selling, it is possible to perform control such that the surplus output of the solar cell 110 is increased (a surplus power selling amount is increased) by discharge control for the storage battery 120 or the like. In the surplus power selling (surplus purchase), the setting information may include information indicating whether or not the output suppression of causing the reverse power flow from the dispersed power source to the power grid 10 to be zero is performed.
(1C) The setting information includes information specifying a type of output suppression of the dispersed power source according to the output suppression message. As described above, the type of output suppression of the dispersed power source may be interpreted as a rule such as the 30 day rule, the 360 hour rule, or the designation rule.
(1D) The setting information includes information specifying a type of power provider that transmits the output suppression. Examples of the power provider that transmits the output suppression include a power company that manages power, n power distribution company that manages distribution of power, and a distribution company that distributes the output suppression transmitted from the power company.
(1E) The setting information includes information indicating whether or not the calendar information included in the output suppression message is updated. In this case, the setting information may include information indicating the latest timing at which the calendar information is updated (the latest update timing). The latest update timing may be a date on which the calendar information is updated, a time at which the calendar information is updated, or a date and time at which the calendar information is updated.

Alternatively, the setting information may include information indicating a next update timing of the calendar information. The next update timing may be a date on which the calendar information is scheduled to be updated, may be a time at which the calendar information is scheduled to be updated, or may be a date and time at which the calendar information is scheduled to be updated. Further, the setting information may include information indicating both the latest update timing and the next update timing.

In an embodiment, the record/schedule information includes at least one information piece (2A) to (2H) among a plurality of information pieces to be described below. Since the record/schedule information includes two or more information pieces, the EMS 160 can know the status of the PCS 130 in further detail.
(2A) The record/schedule information (record information) includes information indicating a cumulative period of the output suppression of the dispersed power source which has already been performed. The cumulative period may be reset daily, monthly, or yearly. Alternatively, the cumulative period may be reset at intervals of predetermined periods decided as a maximum period in which the output suppression of the dispersed power source is performed. In other words, the record/schedule information may include information indicating the cumulative period of the output suppression of the dispersed power source which has already been performed within a predetermined period.
   Here, the cumulative period may be indicated by the number of days or may be indicated by a time. For example, when the 30 day rule is applied, the cumulative period may be indicated by the number of days in which the output suppression of the dispersed power source has been performed. On the other hand, when the 360 hour rule or the designation rule is applied, the cumulative period may be indicated by a time in which the output suppression of the dispersed power source has been performed (for example, unit time such as 30 minutes).
(2B) The record/schedule information (schedule information) includes information indicates a remaining period of the output suppression of the dispersed power source which has not yet been performed within a predetermined period decided as the maximum period in which the output suppression of the dispersed power source is performed. The remaining period may be indicated by days or may be indicated hours. Alternatively, the remaining period may be indicated by a proportion (%) with respect to a predetermined period. For example, when the 30 day rule is applied, the remaining period may be indicated by the remaining number of days or a proportion of the remaining number of days with respect to 30 days. When the 360 hour rule is applied, the remaining period may be indicated by a remaining time (for example, 30 minutes) or a proportion of the remaining time with respect to 360 hours.
(2C) The record/schedule information includes information specifying a predetermined period decided as a maximum period in which the output suppression of the dispersed power source is performed. For example, when the 30 day rule is applied, the information specifying the predetermined period may be indicated by the number of days. When the 360 hour rule is applied, the information specifying the predetermined period may be indicated by a time (for example, in units of 30 minutes).
   The information specifying the predetermined period may be information specifying the type of output suppression of the dispersed power source according to the output suppression message. It is because the predetermined period can be specified by the type of output suppression of the dispersed power source. The information specifying the predetermined period may be information indicating a timing at which the cumulative period and the remaining period are reset (a start timing of the predetermined period).
(2D) The record/schedule information (record information) includes information indicating the amount of power which is suppressed by the output suppression of the dispersed power source which has already been performed (hereinafter referred to as an "amount of cumulative power"). Here, the amount of cumulative power may be a cumulative value of the relative values (for example, suppression of ○○ kW) with respect to the equipment certified output or may be a cumulative value of the relative value (for example, suppression of ○○ kW) with respect to the maximum power generation amount. The maximum power generation amount means a power generation amount which can be output by the dispersed power source when the output suppression of the dispersed power source is not performed in accordance with the output suppression message. For example, when the solar cell 110 is controlled in accordance with maximum power point tracking (MPPT) control, the maximum power generation amount is a power generation amount of the solar cell 110 at an optimum operation point.
   Here, even in the period in which the output suppression of the dispersed power source is performed, the level of the output of the dispersed power source may be the target output suppression level or less due to the relation such as the solar radiation amount. In this case, the output of the dispersed power source may not be actually suppressed. In this case, when the amount of cumulative power is the relative value with respect to the maximum power generation amount, the amount of cumulative power is zero.
   In an embodiment, the PCS 130 is a multi-PCS that controls the output of the solar cell 110 and the output of the storage battery 120. Therefore, in a case in which control of charging the generated power of the solar cell 110 to the storage battery 120 is performed without increasing the output of the PCS 130, the output of the PCS 130 may be less than the target output suppression level. In this case, the output of the solar cell 110 may not be actually performed.
   The amount of cumulative power may be reset daily, monthly, or yearly. Alternatively, the amount of cumulative power may be reset at intervals of predetermined periods decided as a maximum period in which the output suppression of the dispersed power source is performed. In other words, the record/schedule information may include the information indicating amount of power (amount of cumulative power) which is suppressed by the output suppression of the dispersed power source which has already been performed within the predetermined period.
(2E) The record/schedule information (record information) includes information indicating whether or not control of charging the power generated by the solar cell 110 in the storage battery 120 is performed. In an embodiment, since the PCS 130 is a multi-PCS, when control of charging the power generated by the solar cell 110 in the storage battery 120 is performed while performing the output suppression, the record/schedule information includes the information indicating whether or not the solar cell 110 charges the power which is to undergo the output suppression in the storage battery 120. Specifically, the record/schedule information includes information indicating that the solar cell 110 charges the power which is to undergo the output suppression in the storage battery 120, information indicating that the solar cell 110 is scheduled to charge the power which is to undergo the output suppression in the storage battery 120, information indicating that the solar cell 110 does not charge the power which is to undergo the output suppression in the storage battery 120, information indicating that the solar cell 110 is not scheduled to charge the power which is to undergo the output suppression in the storage battery 120, and information indicating that the solar cell 110 is scheduled to stop charging the power which is to undergo the output suppression in the storage battery 120. Further, when the record/schedule information is transmitted from the communication apparatus 132 (the second communication unit 132B) to the EMS 160, information related to the storage capacity of the storage battery 120 may be transmitted together. The information related to the storage capacity includes, for example, a current storage capacity, a storable capacity, or the like.
(2F) The record/schedule information (record information) includes calendar information indicating a record of the output suppression of the dispersed power source which has already been performed. For example, when the 30 day rule is applied, the calendar information may be indicated by a date on which the output suppression of the dispersed power source is made. When the 360 hour rule or the designation rule is applied, the calendar information may be indicated by a date and a time zone (for example, units of 30 minutes) in which the output suppression of the dispersed power source is performed.
(2G) The record/schedule information (schedule information) includes information indicating an updated scheduled start time when a scheduled start time of the output suppression of the dispersed power source is updated. The start time is assumed to be updated by real time transmission of the output suppression message. In this case, the record/schedule information may include the information indicating the updated scheduled start time.
(2H) The record/schedule information (schedule information) includes information indicating an updated scheduled end time when the scheduled end time of the output suppression of the dispersed power source is updated. Here, the scheduled end time of the output suppression of the dispersed power source is updated by real time transmission of the output suppression message. In this case, the record/schedule information may include the information indicating the updated scheduled end time.

The interface 132C is an interface with the conversion apparatus 131. The interface 132C may be a wired interface or a radio interface. In the communication between the communication apparatus 132 and the conversion apparatus 131, a protocol (for example, its own protocol) applied to the PCS 130 is used.

The controller 132D includes a memory and a CPU and controls the communication apparatus 132. For example, the controller 132D controls the output of the dispersed power source in accordance with the output suppression message by controlling the conversion apparatus 131 using the interface 132C. The controller 132D acquires the state of the conversion apparatus 131 (for example, the power generation amount of the solar cell 110, the storage amount of the storage battery 120, and the discharging amount of the storage battery 120) from the conversion apparatus 131 uses the interface 132C. The controller 132D generates a command for controlling the conversion apparatus 131 on the basis of a predetermined message received from the EMS 160 and outputs the generated command to the conversion apparatus 131 using the interface 132C.

### (Power management apparatus)

The power management apparatus according to an embodiment will be described below. The EMS 160 includes a communication unit 161 and a controller 162 as illustrated in Fig. 3.

The communication unit 161 performs communication of a predetermined message having a predetermined format with the communication apparatus 132. As described above, the predetermined format is, for example, a format conforming to the ECHONET Lite scheme.

The controller 162 includes a memory and a CPU and controls the EMS 160. The controller 162 may control the power generation amount of the solar cell 110, the charging amount of the storage battery 120, and the discharging amount of the storage battery 120.

In an embodiment, the controller 162 controls the display apparatus 170 such that the power information indicating the power in the consumer's facility 100 is displayed. The controller 162 performs display control for information related to the output suppression of the dispersed power source in accordance with a predetermined message including at least one of the setting information and the record/schedule information as an information element. The controller 162 performs at least one of a plurality of display controls to be described below.
(1A) in a case in which the setting information includes the information indicating the power selling method for the power output from the dispersed power source, the controller 162 performs control such that the information indicating the power selling method is displayed.
(1B) In a case in which the setting information includes the information specifying the type of output suppression of the dispersed power source according to the output suppression message, the controller 162 performs control such that the information specifying the type of output suppression of the dispersed power source is displayed.
(1C) In a case in which the setting information includes the information indicating whether or not the calendar information included in the output suppression message is updated, the controller 162 performs control such that the information indicating whether or not the calendar information is updated is displayed. Further, the controller 162 may display information indicating a latest update timing of the calendar information or may display information indicating a next update timing of the calendar information.
(2A) In a case in which the record/schedule information (record information) includes the information indicating the cumulative period of the output suppression of the dispersed power source which has already been performed, the controller 162 performs control such that the information indicating the cumulative period is displayed.
(2B) in a case in which the record/schedule information (record information) includes the remaining period of the output suppression of the dispersed power source which has not been performed yet within the predetermined period decided as the maximum period in which the output suppression of the dispersed power source is performed, the controller 162 performs control such that the information indicating the remaining period is displayed.
(2C) In a case in which the record/schedule information includes the information specifying the predetermined period decided as the maximum period in which the output suppression of the dispersed power source is performed, the controller 162 perform control such that the information specifying the predetermined period is displayed. Here, the controller 162 may display the information indicating the predetermined period (for example, 30 days or 360 hours) together with the information indicating the remaining period. Accordingly, the user can easily understand the progress of the output suppression of the dispersed power source.
(2D) In a case in which the record/schedule information (record information) includes the information indicating the amount of power which is suppressed by the output suppression of the dispersed power source which has already been performed, the controller 162 performs control such that the information indicating the amount of cumulative power is displayed.
(2E) In a case in which the record/schedule information (record information) includes the information indicating whether or not control of charging the power generated by the solar cell 110 in the storage battery 120 is performed, the controller 162 performs control such that the information indicating whether or not control of charging the power generated by the solar cell 110 in the storage battery 120 is performed is displayed.
(2F) In a case in which the record/schedule information (record information) includes the calendar information indicating the record of the output suppression of a dispersed power source which has already been performed, the controller 162 performs control such that the information indicating the calendar information is displayed. The calendar information mentioned here may be the same as the calendar information included in the output suppression message or may be information obtained by processing the calendar information included in the output suppression message.
(2G) In a case in which the record/schedule information (schedule information) includes the information indicating the updated scheduled start time, the controller 162 performs control such that the information indicating the updated scheduled start time is displayed.
(2H) In a case in which the record/schedule information (schedule information) includes the information indicating the updated scheduled end time, the controller 162 performs control such that the information indicating the updated scheduled end time is displayed.

The controller 162 according to the embodiment may change the method of controlling each equipment (the storage battery 120 or the load 150) on the basis of the power selling method in a case in which the setting information includes the information indicating the power selling method of the power output from the dispersed power source. For example, when the power selling method is the total amount power selling, the controller 162 controls each equipment (the storage battery 120 or the load 150) regardless of whether or not the output suppression of the dispersed power source is performed. On the other hand, in a case in which the power selling method is the surplus power selling, the controller 162 performs the discharge control for the storage battery 120 or suppresses the power consumption of the load 150 when the output suppression of the dispersed power source is being performed.

### (Message format)

A message format according to an embodiment will be described below. Here, the predetermined format is assumed to be a format conforming to the ECHONET Lite scheme.

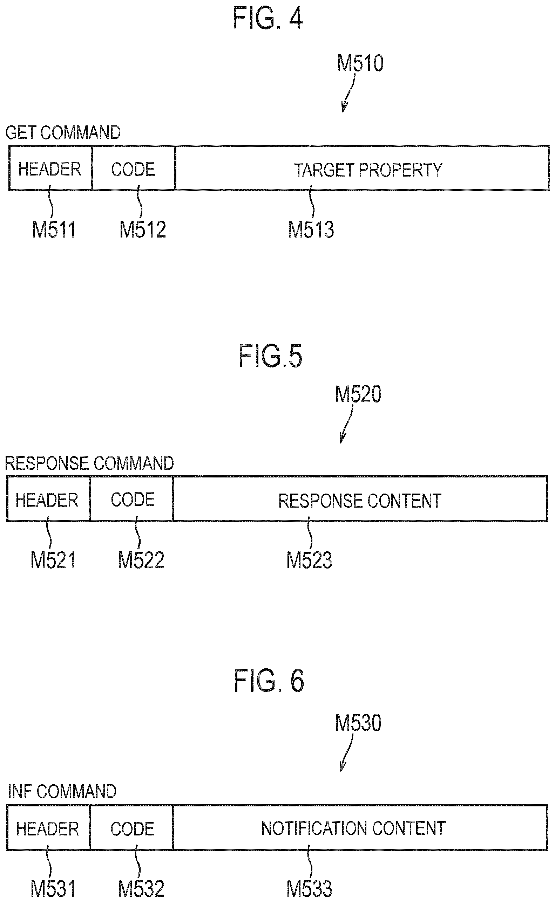

A GET command M510 includes a header M511, a code M512, and a target property M513 as illustrated in Fig. 4. In an embodiment, the GET command M510 is an example of the transmission request message for requesting the EMS 160 to transmit a message and is an example of a message transmitted from the EMS 160 to the communication apparatus 132.

The header M511 is information indicating the destination or the like of the GET command M510. The code M512 is information indicating a type of message including the code M512. Here, the code M512 is information indicating that the message including the code M512 is the GET command. The target property M513 is information indicating target content that the EMS 160 desires to know. The target property M513 is an information element capable of storing information for requesting transmission of the at least one of the setting information and the record/schedule information.

A response command M520 includes a header M521, a code M522, and a response content M523 as illustrated in Fig. 5. In an embodiment, the response command is an example of the predetermined message including the at least one of the setting information and the record/schedule information as the information element and is transmitted from the communication apparatus 132 to the EMS 160 in accordance with the transmission request message (the GET command).

The header M521 is information indicating the destination or the like of the response command M520. The code M522 is information indicating a type of message including the code M522. Here, the code M522 is information indicating that the message including the code M522 is the response command. The response content M523 is information indicating content requested by the GET command. The response content M523 is an information element capable of storing the at least one of the setting information and the record/schedule information.

The INF command M530 includes a header M531, a code M532, and a notification content M533 as illustrated in Fig. 6. In an embodiment, the INF command is an example of the predetermined message including the at least one of the setting information and the record/schedule information as the information element and is transmitted from the communication apparatus 132 to the EMS 160 without depending on the transmission request message (the GET command).

The header M531 is information indicating the destination or the like of the INF command M530. The code M532 is information indicating a type of message including the code M532. Here, the code M532 is information indicating that the message including the code M532 is the INF command. The notification content M533 is information indicating content to be reported to the EMS 160. The notification content M533 is an information element capable of storing the at least one of the setting information and the record/schedule information.

### (Power management method)

A power management method according to an embodiment will be described below. Here, the predetermined format used for the communication between the communication apparatus 132 and the EMS 160 is assumed to be a format conforming to the ECHONET Lite scheme.

Firstly, the description will proceed with an example in which the predetermined message including the at least one of the setting information and the record/schedule information as the information element is the response command transmitted in accordance with the GET command will be described.

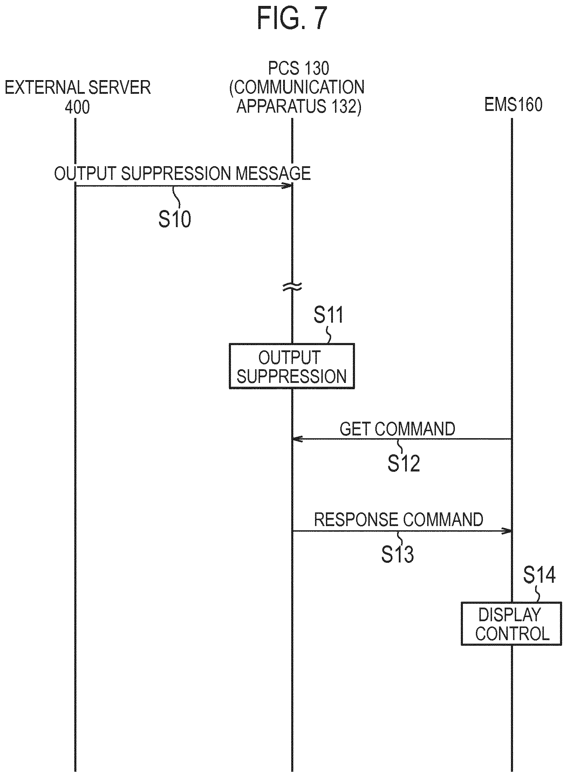

As illustrated in Fig. 7, in step S10, the communication apparatus 132 receives the output suppression message from the external server 400 without going through the EMS 160.

In step S11, the communication apparatus 132 performs the output suppression of the dispersed power source in accordance with the output suppression message.

In step S12, the EMS 160 transmits the GET command to the communication apparatus 132. The EMS 160 may periodically transmit the GET command to the communication apparatus 132. The GET command includes the information for requesting the transmission of the at least one of the setting information and the record/schedule information as the information element.

In step S13, the communication apparatus 132 transmits the response command to the EMS 160 in accordance with the GET command. The response command is a predetermined message including the at least one of the setting information and the record/schedule information as the information element.

In step S14, the EMS 160 performs display control for the information related to the output suppression of the dispersed power source in accordance with the response command.

Secondly, the description will proceed with an example in which the predetermined message including the at least one of the setting information and the record/schedule information as the information element is the response command transmitted without depending on the GET command.

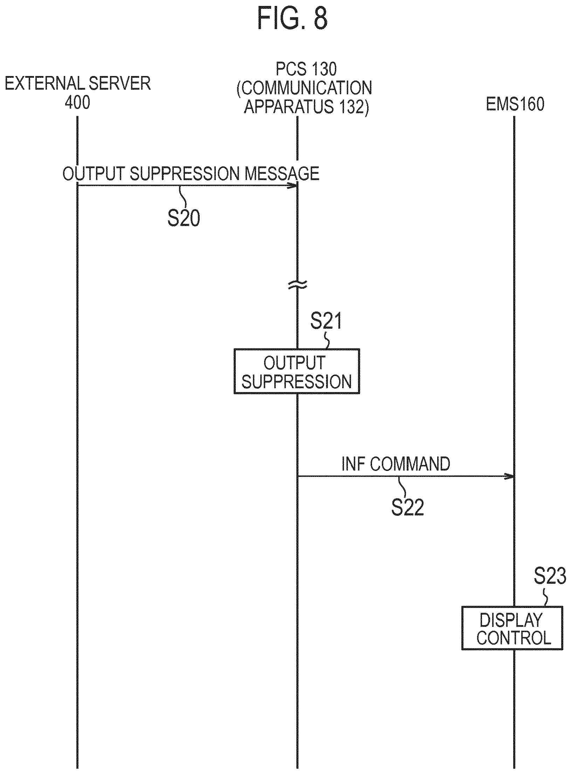

As illustrated in Fig. 8, in step S20, the communication apparatus 132 receives the output suppression message from the external server 400 without going through the EMS 160.

In step S21, the communication apparatus 132 performs the output suppression of the dispersed power source in accordance with the output suppression message.

In step S22, the communication apparatus 132 transmits the INF command to the EMS 160 without depending on the GET command. The communication apparatus 132 may periodically transmit the INF command in the period in which the output suppression of the dispersed power source is performed. The INF command is the predetermined message including the at least one of the setting information and the record/schedule information as the information element.

In step S23, the EMS 160 performs display control for the information related to the output suppression of the dispersed power source in accordance with the INF command.

### (Operations and Effects)

In an embodiment, the communication apparatus 132 transmits the predetermined message including the setting information as the information element to the EMS 160. Therefore, the EMS 160 can know the setting of the PCS 130 related to the output suppression of the dispersed power source.

In an embodiment, the communication apparatus 132 transmits the predetermined message including the record/schedule information as the information element to the EMS 160. Therefore, the EMS 160 can know the record and/or schedule of the output suppression of the dispersed power source associated with the control according to the output suppression message.

### [Other embodiments]

Although the present disclosure has been described with reference to the above-described embodiments, the description and the drawings constituting a part of this disclosure should not be interpreted to limit the present disclosure. Various alternative embodiments, examples, and operational techniques will be apparent to those skilled in the art from this disclosure.

In the embodiment, the solar cell 110 has been described as an example of the dispersed power source operating in accordance with the output suppression message. However, the dispersed power source is not limited to this example. The dispersed power source may be an apparatus that generates power using natural energy such as wind power or geothermal power. Alternatively, the dispersed power source may be a fuel cell that generates electrical power using fuel gas.

In the embodiment, the example in which the predetermined format used for the communication between the communication apparatus 132 and the EMS 160 is a format conforming to the ECHONET Lite scheme has been described. However, the embodiment is not limited to this example. The predetermined format may be a format standardized as a format used in the consumer's facility 100.

In the embodiment, the conversion apparatus 131 and the communication apparatus 132 are separately installed, but the embodiment is not limited to this example. The functions of the communication apparatus 132 may be installed in the conversion apparatus 131.

In the embodiment, the PCS 130 (multi-PCS) for controlling the output of the solar cell 110 and the output of the storage battery 120 has been described. However, the embodiment is not limited to this example. The PCS 130 may be an equipment that controls only the output of at least one of the solar cell 110 and the fuel cell.

Further, when the second communication unit 132B transmits the predetermined message including the at least one of the setting information and the record/schedule information as the information element to the EMS 160, the second communication unit 132B may transmit authentication information of the PCS 130 together. As the authentication information, information identifying an individual of the PCS 130 (for example, an ID), a specific password, or the like may be used. When the authentication information is transmitted together, security can be improved.

In the embodiment, the first communication unit 132A and the second communication unit 132B are separate members, but the first communication unit 132A and the second communication unit 132B may be integrated. In other words, the first communication unit 132A may double as the second communication unit 132B.

The output suppression of the dispersed power source is performed by the PCS 130. Therefore, the output suppression of the dispersed power source can be considered as the output suppression of the PCS 130.

## Claims

1. A power conversion apparatus (130), comprising:
a first communicator (132A) configured to receive, from an external server (400), an output suppression message instructing output suppression of a dispersed power source; and
a second communicator (132B) configured to perform communication of a predetermined message having a predetermined format with a power management apparatus (160),
wherein the predetermined format includes an information element capable of storing setting information indicating a setting related to the output suppression of the dispersed power source, and
the second communicator (132B) is configured to transmit, to the power management apparatus (160), the predetermined message including the setting information as the information element,
**characterized in that**
the setting information includes information specifying a type of the output suppression of the dispersed power source according to the output suppression message.

2. The power conversion apparatus (130) according to claim 1,
wherein the setting information includes information indicating a power selling method of power output from the dispersed power source.

3. The power conversion apparatus (130) according to claims 1 to 2,
wherein the predetermined format includes an information element capable of storing record information related to a record of the output suppression of the dispersed power source, and
the second communicator (132B) is configured to transmit, to the power management apparatus (160), the predetermined message including the record information as the information element.

4. The power conversion apparatus (130) according to claims 1 to 3,
wherein the record information includes information indicating the record of the output suppression of the dispersed power source within a predetermined period decided as a maximum period in which the output suppression of the dispersed power source is performed.

5. The power conversion apparatus (130) according to any one of claims 1 to 4,
wherein the output suppression message includes calendar information indicating a schedule of the output suppression of the dispersed power source, and
the setting information includes information indicating whether or not the calendar information is updated.

6. The power conversion apparatus (130) according to claim 5,
wherein the setting information includes information indicating a latest update timing of the calendar information.

7. The power conversion apparatus (130) according to claim 5 or 6,
wherein the setting information includes information indicating a next update timing of the calendar information.

8. The power conversion apparatus (130) according to any one of claims 1 to 7,
wherein the predetermined format used for communication between the second communicator (132B) and the power management apparatus (160) is different from a format used for communication between the first communicator (132A) and the external server (400).

9. A power management apparatus (160), comprising:
a controller (162) configured to control a display apparatus such that power information indicating power used in a facility is displayed; and
a communicator (161) configured to perform communication of a predetermined message having a predetermined format with a power conversion apparatus (130) that receives, from an external server (400), an output suppression message instructing output suppression of a dispersed power source;
wherein the predetermined format includes an information element capable of storing setting information indicating a setting related to the output suppression of the dispersed power source,
the communicator (161) is configured to receive, from the power conversion apparatus (130), the predetermined message including the setting information as the information element, and
the controller (162) is configured to perform display control for information related to the output suppression of the dispersed power source in accordance with the predetermined message including the setting information as the information element,
**characterized in that**
the setting information includes information specifying a type of the output suppression of the dispersed power source according to the output suppression message.

10. A power management method, comprising:
a step of receiving, by a power conversion apparatus (130), an output suppression message from an external server (400), the output suppression message instructing output suppression of a dispersed power source, the power conversion apparatus (130) performing communication of a predetermined message having a predetermined format with a power management apparatus (160) that manages power of an equipment installed in a consumer's facility; and
a step of transmitting, by the power conversion apparatus (130), to the power management apparatus (160), the predetermined message including setting information indicating a setting related to the output suppression of the dispersed power source as the information element included in the predetermined format,
**characterized in that**
the setting information includes information specifying a type of the output suppression of the dispersed power source according to the output suppression message.

## Patentansprüche

1. Stromumwandlungsvorrichtung (1), umfassend:
einen ersten Kommunikator (132A), der konfiguriert ist, um von einem externen Server (400) eine Ausgabeunterdrückungsnachricht zu empfangen, die eine Ausgabeunterdrückung einer verteilten Stromquelle anweist; und
einen zweiten Kommunikator (132B), der konfiguriert ist, um eine Kommunikation einer vorbestimmten Nachricht mit einem vorbestimmten Format mit einer Stromverwaltungsvorrichtung (160) durchzuführen,
wobei das vorbestimmte Format ein Informationselement beinhaltet, das Einstellungsinformationen speichern kann, die eine Einstellung in Bezug auf die Ausgangsunterdrückung der verteilten Stromquelle angeben, und
der zweite Kommunikator (132B) konfiguriert ist, um die vorbestimmte Nachricht, die die Einstellungsinformationen als Informationselement enthält, an die Stromverwaltungsvorrichtung (160) zu übertragen,
**dadurch gekennzeichnet, dass**
die Einstellungsinformationen Informationen beinhalten, die einen Typ der Ausgangsunterdrückung der verteilten Stromquelle gemäß der Ausgangsunterdrückungsnachricht spezifizieren.

2. Stromumwandlungsvorrichtung (130) nach Anspruch 1,
wobei die Einstellungsinformationen Informationen beinhalten, die ein Stromverkaufsverfahren des von der verteilten Stromquelle abgegebenen Stroms angeben.

3. Stromumwandlungsvorrichtung (130) nach Ansprüchen 1 bis 2,
wobei das vorbestimmte Format ein Informationselement beinhaltet, das Aufzeichnungsinformationen, die sich auf eine Aufzeichnung der Ausgangsunterdrückung der verteilten Stromquelle beziehen, speichern kann, und
der zweite Kommunikator (132B) konfiguriert ist, um die vorbestimmte Nachricht, die die Aufzeichnungsinformationen als Informationselement beinhaltet, an die Stromverwaltungsvorrichtung (160) zu übertragen.

4. Stromumwandlungsvorrichtung (130) nach Ansprüchen 1 bis 3,
wobei die Aufzeichnungsinformationen Informationen beinhalten, die die Aufzeichnung der Ausgangsunterdrückung der verteilten Stromquelle innerhalb eines vorbestimmten Zeitraums angibt, der als ein maximaler Zeitraum festgelegt ist, in dem die Ausgangsunterdrückung der verteilten Stromquelle durchgeführt wird.

5. Stromumwandlungsvorrichtung (130) nach einem der Ansprüche 1 bis 4,
wobei die Ausgangsunterdrückungsnachricht Kalenderinformationen beinhalten, die einen Zeitplan der Ausgangsunterdrückung der verteilten Stromquelle angeben, und
die Einstellungsinformationen Informationen beinhalten, die angeben, ob die Kalenderinformationen aktualisiert werden oder nicht.

6. Stromumwandlungsvorrichtung (130) nach Anspruch 5,
wobei die Einstellungsinformationen Informationen beinhalten, die einen letzten Aktualisierungszeitpunkt der Kalenderinformationen angeben.

7. Stromumwandlungsvorrichtung (130) nach Anspruch 5 oder 6,
wobei die Einstellungsinformationen Informationen beinhalten, die einen nächsten Aktualisierungszeitpunkt der Kalenderinformationen angeben.

8. Stromumwandlungsvorrichtung (130) nach einem der Ansprüche 1 bis 7,
wobei das vorbestimmte Format, das für die Kommunikation zwischen dem zweiten Kommunikator (132B) und der Stromverwaltungsvorrichtung (160) verwendet wird, sich von einem Format unterscheidet, das für die Kommunikation zwischen dem ersten Kommunikator (132A) und dem externen Server (400) verwendet wird.

9. Stromverwaltungsvorrichtung (160), umfassend:
eine Steuerung (162), die konfiguriert ist, um eine Anzeigevorrichtung derart zu steuern, dass Strominformationen, die den in einer Anlage verwendeten Strom angeben, angezeigt werden; und
einen Kommunikator (161), der konfiguriert ist, um Kommunikation einer vorbestimmten Nachricht mit einem vorbestimmten Format mit einer Stromumwandlungsvorrichtung (130) durchzuführen, die von einem externen Server (400) eine Ausgangsunterdrückungsnachricht empfängt, die eine Ausgangsunterdrückung einer verteilten Stromquelle anweist;
wobei das vorbestimmte Format ein Informationselement beinhaltet, das Einstellungsinformationen speichern kann, die eine Einstellung in Bezug auf die Ausgangsunterdrückung der verteilten Stromquelle angeben,
der Kommunikator (161) konfiguriert ist, um die vorbestimmte Nachricht, die die Einstellungsinformationen als Informationselement enthält, an die Stromverwaltungsvorrichtung (130) zu übertragen, und
die Steuerung (162) konfiguriert ist, um eine Anzeigesteuerung für Informationen in Bezug auf die Ausgangsunterdrückung der verteilten Stromquelle gemäß der vorbestimmten Nachricht durchzuführen, die die Einstellungsinformationen als Informationselement beinhaltet,
**dadurch gekennzeichnet, dass**
die Einstellungsinformationen Informationen beinhalten, die einen Typ der Ausgangsunterdrückung der verteilten Stromquelle gemäß der Ausgangsunterdrückungsnachricht spezifizieren.

10. Stromverwaltungssystem, umfassend
einen Schritt des Empfangens, durch eine Stromumwandlungsvorrichtung (130) einer Ausgangsunterdrückungsnachricht von einem externen Server (400), wobei die Ausgangsunterdrückungsnachricht Ausgangsunterdrückung einer verteilten Stromquelle anweist, wobei die Stromumwandlungsvorrichtung (130) Kommunikation von einer vorbestimmten Nachricht mit einem vorbestimmten Format mit einer Stromverwaltungsvorrichtung (160) a durchführt, die Strom in eines Geräts verwaltet, die in einer Anlage eines Verbrauchers installiert ist; und
einen Schritt zum Übertragen, durch die Stromumwandlungsvorrichtung (130), an die Stromverwaltungsvorrichtung (160), der vorbestimmten Nachricht, die Einstellungsinformationen beinhaltet, die eine Einstellung in Bezug auf die Ausgangsunterdrückung der verteilten Stromquelle als das Informationselement angeben, das in dem vorbestimmten Format beinhaltet ist,
**dadurch gekennzeichnet, dass**
die Einstellungsinformationen Informationen beinhalten, die einen Typ der Ausgangsunterdrückung der verteilten Stromquelle gemäß der Ausgangsunterdrückungsnachricht spezifizieren.

## Revendications

1. Appareil de conversion d'énergie (130), comprenant :
un premier communicateur (132A) configuré pour recevoir, depuis un serveur externe (400), un message de suppression de sortie ordonnant une suppression de sortie d'une alimentation électrique dispersée ; et
un deuxième communicateur (132B) configuré pour réaliser la communication d'un message prédéterminé ayant un format prédéterminé avec un appareil de gestion d'énergie (160),
le format prédéterminé comprenant un élément d'information capable de stocker des informations de réglage indiquant un réglage en rapport avec la suppression de sortie de l'alimentation électrique dispersée, et
le deuxième communicateur (132B) étant configuré pour transmettre, à l'appareil de gestion d'énergie (160), le message prédéterminé comprenant les informations de réglage en tant qu'élément d'information,
**caractérisé en ce que**
les informations de réglage comprennent des informations spécifiant un type de la suppression de sortie de l'alimentation électrique dispersée selon le message de suppression de sortie.

2. Appareil de conversion d'énergie (130) selon la revendication 1,
dans lequel les informations de réglage comprennent des informations indiquant un procédé de vente d'énergie de la sortie d'énergie depuis l'alimentation électrique dispersée.

3. Appareil de conversion d'énergie (130) selon les revendications 1 à 2,
dans lequel le format prédéterminé comprend un élément d'information capable de stocker des informations d'archivé en rapport avec une archive de la suppression de sortie de l'alimentation électrique dispersée, et
le deuxième communicateur (132B) est configuré pour transmettre, à l'appareil de gestion d'énergie (160), le message prédéterminé comprenant les informations d'archivé en tant qu'élément d'information.

4. Appareil de conversion d'énergie (130) selon les revendications 1 à 3,
dans lequel les informations d'archivé comprennent des informations indiquant l'archive de la suppression de sortie de l'alimentation électrique dispersée dans une période prédéterminée établie en tant que période maximale dans laquelle la suppression de sortie de l'alimentation électrique dispersée est réalisée.

5. Appareil de conversion d'énergie (130) selon l'une quelconque des revendications 1 à 4,
dans lequel les informations de suppression de sortie comprennent des informations de calendrier indiquant une planification de la suppression de sortie de l'alimentation électrique dispersée, et
les informations de réglage indiquent si, oui ou non, les informations de calendrier sont actualisées.

6. Appareil de conversion d'énergie (130) selon la revendication 5,
dans lequel les informations de réglage comprennent des informations indiquant un moment d'actualisation le plus récent des informations de calendrier.

7. Appareil de conversion d'énergie (130) selon la revendication 5 ou 6,
dans lequel les informations de réglage comprennent des informations indiquant un prochain moment d'actualisation des informations de calendrier.

8. Appareil de conversion d'énergie (130) selon l'une quelconque des revendications 1 à 7,
dans lequel le format prédéterminé utilisé pour une communication entre le deuxième communicateur (132B) et l'appareil de gestion d'énergie (160) est différent d'un format utilisé pour une communication entre le premier communicateur (132A) et le serveur externe (400).

9. Appareil de gestion d'énergie électrique (160), comprenant :
un dispositif de commande (162) configuré pour commander un appareil d'affichage de sorte que des informations d'énergie indiquant l'énergie dans une installation soient affichées ; et
un communicateur (161) configuré pour réaliser la communication d'un message prédéterminé ayant un format prédéterminé avec un appareil de conversion d'énergie (130) qui reçoit, depuis un serveur externe (400), un message de suppression de sortie ordonnant une suppression de sortie d'une alimentation électrique dispersée ;
le format prédéterminé comprenant un élément d'information capable de stocker des informations de réglage indiquant un réglage en rapport avec la suppression de sortie de l'alimentation électrique dispersée,
le communicateur (161) est configuré pour recevoir, depuis l'appareil de conversion d'énergie (130), le message prédéterminé comprenant les informations de réglage en tant qu'élément d'information, et
le dispositif de commande (162) est configuré pour réaliser une commande d'affichage pour des informations en rapport avec la suppression de sortie de l'alimentation électrique dispersée en conformité avec le message prédéterminé comprenant les informations de réglage en tant qu'élément d'information,
**caractérisé en ce que**
les informations de réglage comprennent des informations spécifiant un type de la suppression de sortie de l'alimentation électrique dispersée selon le message de suppression de sortie.

10. Procédé de gestion d'énergie, comprenant :
une étape consistant à recevoir, par un appareil de conversion d'énergie (130), un message de suppression de sortie depuis un serveur externe (400), le message de suppression de sortie ordonnant une suppression de sortie d'une alimentation électrique dispersée, l'appareil de conversion d'énergie (130) réalisant la communication d'un message prédéterminé ayant un format prédéterminé avec un appareil de gestion d'énergie (160) qui gère l'énergie d'un équipement installé dans l'installation d'un consommateur ; et
une étape consistant à transmettre, par l'appareil de conversion d'énergie (130), à l'appareil de gestion d'énergie (160), le message prédéterminé le message prédéterminé comprenant des informations de réglage en rapport avec la suppression de sortie de l'alimentation électrique dispersée en tant qu'élément d'information compris dans le format prédéterminé,
**caractérisé en ce que**
les informations de réglage comprennent des informations spécifiant un type de la suppression de sortie de l'alimentation électrique dispersée selon le message de suppression de sortie.
